# EUROPEAN PATENT APPLICATION

(11) **EP 2 657 813 A2**
(43) Date of publication of application: **30.10.2013**
(21) Application number: 12185062.2
(22) Date of filing: 19.09.2012
(51) Int. Cl.: G06F 3/041, G06F 3/044

(54) **Electronic device**

(30) Priority: 24.04.2012 CN 201210122589
(71) Applicant: Shenzhen Topsensing Electronics Technology Co., Ltd., Shenzhen, Guangdong 518000 (CN)
(72) Inventor: Wu, Lijuan, 518000 Shenzhen (CN); Zhang, Haohui, 518000 Shenzhen (CN); Li, Yi, 518000 Shenzhen (CN); Xiang, Yicheng, 518000 Shenzhen (CN)
(74) Representative: Michalski Hüttermann & Partner Patentanwälte

(57) **Abstract**

An electronic device includes a touch sensor, a touch sensor, and a controller. The touch sensor is configured for detecting a touch action on a touchscreen and reporting touch information. The proximity sensor is configured for detecting nearness of a target object and reporting a proximity information. The controller is connected to the touch sensor and the proximity sensor, the touch sensor and the proximity sensor are putted in a same circuit, such that the touch sensor and the proximity sensor are controlled by the same controller. When the proximity sensor detecting nearness of the target object, the controller will prevent touch report event.

## Description

### BACKGROUND

1. Technical Field

The present disclosure relates to electronic devices, and particularly, to an electronic device having functions of touching and preventing from inadvertently touch.

2. Discussion of Related Art

Capacitance touchscreens has advantages of innovative mode of operation, and conforms to human input habits, therefore the capacitance touchscreen is widely used in a variety of electronic devices. For example, almost all kinds of smart phones and tablets usually include a capacitance touchscreen, such that the capacitance touchscreens become one of the most popular devices.

The capacitance touchscreens have many advantages, however, the capacitance touchscreens also has some inadequacies in actual operations, for example, when a user makes a telephone call by a mobile phone having a capacitance touchscreen, face or ears of the user are prone to touch the capacitance touchscreen, such that an inadvertently touch may be easy made, which will cause the telephone call to terminate, or the mobile phone to enter an error state.

Therefore, in order to solve the problem of inadvertently touching, the electronic device such as mobile phones or tablets, usually includes a proximity sensor, such as ultrasonic proximity sensors, infrared proximity sensors. The proximity sensor is configured to detect nearness of the face of the user, such that the touchscreen is locked to be prevented from inadvertently touching.

However, the proximity sensor and control circuits of the proximity sensor should increase the design space and hardware costs.

Therefore, it's better to change current proximity design to resolve above defects.

### SUMMARY OF THE INVETION

In one aspect, an electronic device is provided. The electronic device includes a touch sensor, a proximity sensor, and a controller. The touch sensor is configured for detecting a touch action on a touchscreen and reporting a touch information. The proximity sensor is designed for detecting a target object closing and reporting a proximity information. The controller is connected to the touch sensor and the proximity sensor. The touch sensor and the proximity sensor are putted in a same circuit, such that the touch sensor and the proximity sensor are controlled by the same controller. When the proximity sensor detecting nearness of the target object, the controller will prevent touch report event.

In a preferred embodiment, wherein the touch sensor is a capacitive touch sensor, the capacitive touch sensor is further configured to detect the target object; after the target object is detected by the capacitive touch sensor, when the proximity sensor detects the nearness of the target object, the controller will prevent touch report event.

In a preferred embodiment, wherein the controller includes a micro control unit and a storage unit. The micro control unit is connected to the touch sensor and the proximity sensor, and configured to send an instruction corresponding to the touch information of the touch sensor and the proximity information of the proximity sensor. The storage unit is connected to the micro control unit and configured to storage program or data.

In a preferred embodiment, wherein the controller further includes a communication unit, the communication unit is connected to the micro control unit and configured to communicate with the micro control unit and a host machine of the electronic device.

In a preferred embodiment, wherein the micro control unit includes a plurality of pins corresponding to the touch sensor and the proximity sensor.

In a preferred embodiment, wherein the controller is arranged on a flexible printed circuit board.

In a preferred embodiment, wherein the proximity sensor is a capacitance sensor, and the proximity sensor detects the nearness of the target object by change of capacitance.

In a preferred embodiment, wherein the proximity sensor is an inductance sensor, and the proximity sensor detects the nearness of the target object by change of inductance.

In a preferred embodiment, wherein the proximity sensor is arranged on a sensing area or a non-sensing area of the touchscreen.

In a preferred embodiment, wherein the proximity sensor includes one induction antenna or a plurality of induction antennas.

In a preferred embodiment, wherein the plurality of induction antennas are dispersed or concentrated in the electronic device.

In a preferred embodiment, wherein the proximity sensor is made of conductive material.

In a preferred embodiment, wherein the conductive materials is metal, alloy or transparent conductive material.

In a preferred embodiment, wherein the proximity sensor is made of transparent conductive material.

In a preferred embodiment, wherein the transparent conductive material is indium tin oxide(ITO), carbon nanotubes, graphene or nanometre -metal.

In other aspect, an electronic device is also provided. The electronic device includes a touch sensor, a proximity sensor, and a controller. The touch sensor is configured for detecting a touch action on a touchscreen and reporting a touch information. The proximity sensor is designed for detecting a target object closing and reporting a proximity information. The controller is connected to the touch sensor and the proximity sensor. The touch sensor and the proximity sensor are putted in a same circuit, such that the touch sensor and the proximity sensor are controlled by the same controller. The touch sensor is further configured to detect touch area of the target object, the controller determines whether the touch area of the target object is larger than a preset area and touch points of the target object are continuous; if the touch area of the target object is larger than present area and touch points of the target object is continuous, the controller determines whether touch information of the target object is transmitted to host machine of the electronic device after the controller receives the proximity information from the proximity sensor.

In a preferred embodiment, wherein the controller includes a micro control unit and a storage unit. The micro control unit is connected to the touch sensor and the proximity sensor and configured to send an instruction corresponding to the touch information of the touch sensor and the proximity information of the proximity sensor. The storage unit is connected to the micro control unit and configured to storage program or data.

In a preferred embodiment, wherein the controller further includes a communication unit, the communication unit is connected to the micro control unit and configured to communicate with the micro control unit and the host machine of the electronic device.

In a preferred embodiment, wherein the micro control unit includes a plurality of pins corresponding to the touch sensor and the proximity sensor.

In a preferred embodiment, wherein the controller is arranged on a flexible printed circuit board.

Other advantages and novel features will become more apparent from the following detailed description of various embodiments, when taken in conjunction with the accompanying drawings.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout several views, and all the views are schematic.

FIG. 1 is a block diagram of an embodiment of an electronic device.

FIG. 2 is a schematic structure view of the electronic device shown in FIG. 1.

FIGS. 3A through 3F are schematic views of a proximity senor of the electronic device shown in FIG 2.

FIG. 4 is a schematic view of a micro control unit of the electronic device shown in FIG. 1.

### DETAILED DESCRIPTION OF THE PREFERRED EMBODIMENTS

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

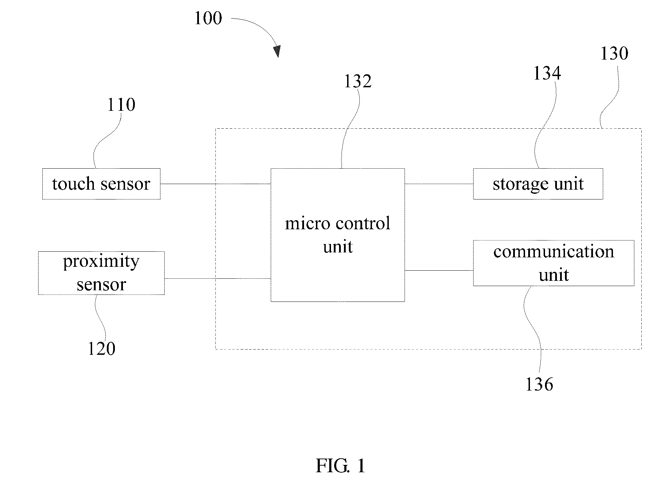

FIG 1 is block diagram of a first embodiment of an electronic device.

Referring to FIG. 1, the electronic device includes a touch sensor 110, a proximity sensor 120, and a controller 130.

The touch sensor 110 is configured to detect an object touching on a touchscreen and generate touch information. For example, a finger touches the touchscreen, the touch sensor 110 detects the touch of the finger, and generates touch information of the finger. The electronic device 100 implements touch function according to the touch information.

The proximity sensor 120 is configured to detect a target object closing and report proximity information. In an embodiment, the target object, such as face, hands or ears, may have an area which is larger than that of the finger. In other word, an inducing area of the touchscreen causing by the target object is larger than that causing by the finger.

The controller 130 is connected to the touch sensor 110 and the proximity sensor 120. The controller 130 integrates a controlling function of the touch sensor 110 and the proximity sensor 120, such that the touch sensor 110 and the proximity sensor 120 are controlled by the same controller. In other word, the controller 130 integrates a controlling function of the touch sensor 110 and the proximity sensor 120, such that the touch sensor 110 and the proximity sensor 120 are controlled only by the controller 130.

Referring to FIG. 1, the controller 130 includes a micro control unit 132, a storage unit 134, and a communication unit 136. The micro control unit 132 is connected to the touch sensor 110 and the proximity sensor 120, and configured to send an instruction according to the touch information of the touch sensor 110 and the proximity information of the proximity sensor 120. The storage unit 134 is connected to the micro control unit 132, and configured to storage program or data. The communication unit 136 is connected to the micro control unit 132, and configured to communicate with the micro control unit 132 and a host machine of the electronic device 100.

In an embodiment, when the proximity sensor 120 detecting nearness of the target object, the controller 130 will prevent touch report event according to touches of the target object. For example, the electronic device 100 is a mobile phone having a touchscreen, when a user making a telephone call by the mobile phone, face of the user is close to the touchscreen of the mobile phone, the touchscreen of mobile phone may be inadvertently touched by the face of user. However, because of the proximity sensor 120, the proximity sensor 120 reports a touch information when the face of user near the touchscreen of the mobile phone, the controller 130 receives the touch information and send an instruction according to the touch information, the instruction is that the touch information is not be implemented. In other word, the touch of the face of user is a valid touch. Furthermore, the touch sensor 110 and the proximity sensor 120 are controlled by the same one controller, such that design space and hardware cost of the electronicdevice 100 are decreased, and touches on the touchscreen of the electronic device 100 are in a unified control and false discrimination of the touches on the touchscreen are reduced.

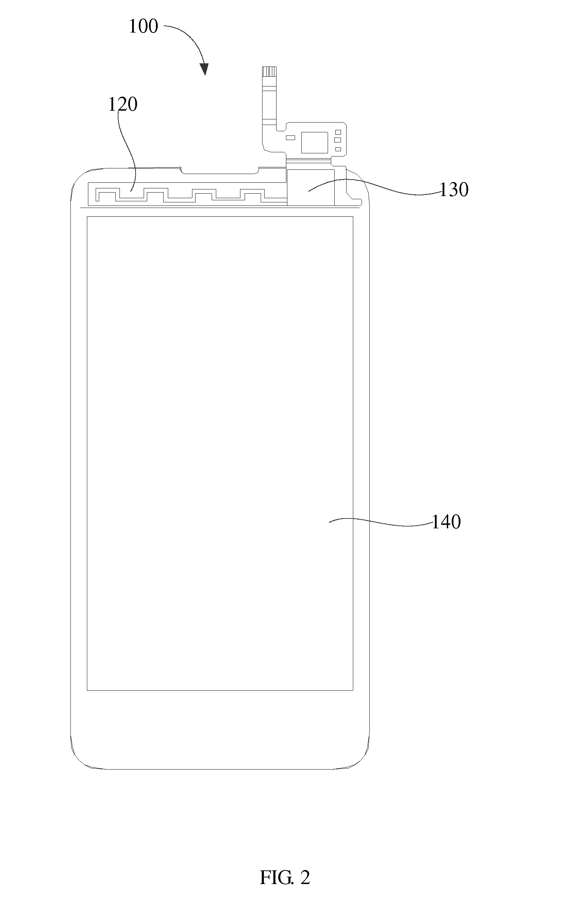

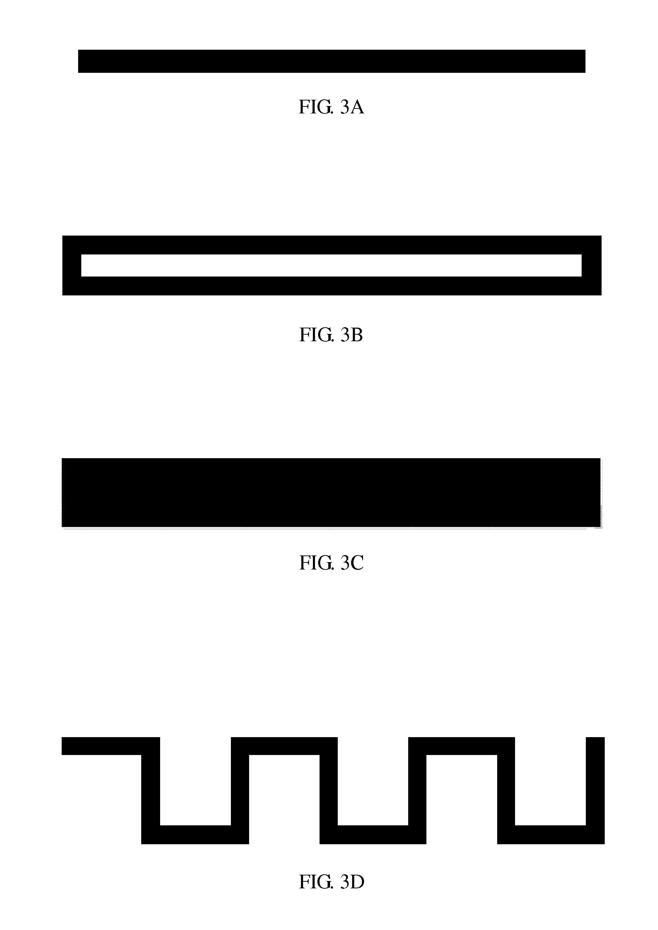

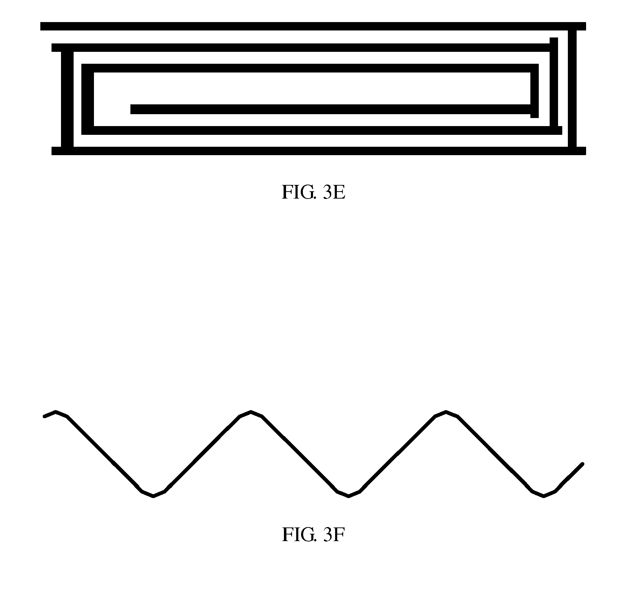

FIG. 2 is a schematic structure view of the electronic device shown in FIG. 1. FIGS. 3A through 3F are schematic views of a proximity senor of the electronic device shown in FIG 2.

The electronic device 100 will be described combined with FIGS. 2, 3A through 3F in detail as follow.

Referring to FIG. 2, the electronic device 100 may be a mobile phone, a tablet personal computer, or other electronic device 100 having a touchscreen.

The touch sensor 110 is disposed below a sensing area 140 of the touchscreen 140. In an embodiment, the touch sensor 110 may be a capacitance sensor or a resistive sensor. The touch sensor 110 may be multiple sensing electrodes arrayed in vertical and horizontal. The touch sensor 110 is made of transparent conductive material, such as indium tin oxide, carbon nanotubes, graphene or nanometer-metal and so on.

The proximity sensor 120 is disposed outside of the sensing area of the touchscreen. In other word, the proximity sensor 120 is disposed on a non-sensing area. In an alternative embodiment, the proximity sensor 120 may be disposed on the sensing area 140 of the touchscreen. In other word, the proximity sensor 120 may be a partial portion of the sensing area 140. When the host machine starts function of the proximity sensor 120, the controller 130 controls the partial portion of the sensing area 140 to implement the function of the proximity sensor 120. When the host machine closes the function of the proximity sensor 120, the partial portion of the sensing area 140 restores the original function of touch sensing.

The proximity sensor 120 may be a capacitance sensor, or an inductance sensor. When the proximity sensor 120 is a capacitance sensor, and the proximity sensor 120 detects the nearness of the target object by change of capacitance. In other word, the proximity sensor 120 is regarded as an electrode being like an antenna, the target object is regarded as other electrode plate. When the target object near the proximity sensor 120, a capacitance between the target object and the proximity sensor 120 are changed with the distance between the target object and the proximity sensor 120. The proximity sensor 120 detects the change of the capacitance between the target object and the proximity sensor 120, that is, the proximity sensor 120 detects the nearness of the target object. Similarly, when the proximity sensor 120 is an inductance sensor, the proximity sensor detects the nearness of the target object by change of inductance.

In an embodiment, the proximity sensor 120 may be one induction antenna or a plurality of induction antennas. When the proximity sensor 120 is a plurality of induction antennas, the plurality of induction antennas are concentrated in the electronic device 100. In an alternative embodiment, the plurality of induction antennas are dispersed in the electronic device 100, such that sensing range of the proximity sensor 120 is larger.

Referring to FIGS. 3A through 3F, the proximity sensor 120 can be made into a variety of antenna shaped. The proximity sensor 120 can also be made into any other shapes.

The proximity sensor 120 may be made of conductive material, such as metal, alloy or transparent conductive material, but is no limited to the above mentioned.

FIG. 2 is schematic view of the controller 130 disposed in the electronic device 100. The controller 130 may be disposed in any other portion of the electronic device 100. The controller 130 is connected to the touch sensor 110 and the proximity sensor 120. The controller 130 integrates a controlling function of the touch sensor 110 and the proximity sensor 120, such that the touch sensor 110 and the proximity sensor 120 are controlled by the same controller. In other word, the controller 130 integrates a controlling function of the touch sensor 110 and the proximity sensor 120, such that the touch sensor 110 and the proximity sensor 120 are controlled only by the controller 130. The controller 130 is arranged on a flexible printed circuit board. Furthermore, the controller 130 may be arranged on any other printed circuit board.

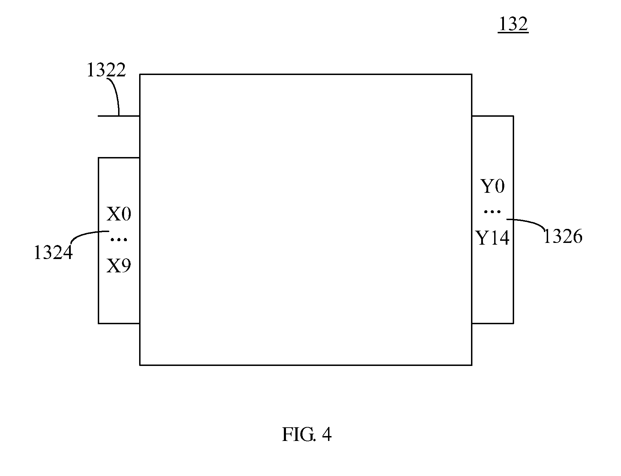

FIG. 4 is a schematic view of a micro control unit of the electronic device shown in FIG. 1.

Referring to FIG. 4, the micro control unit 132 includes a pin 1322 corresponding to the proximity sensor 120, the pin 1322 is configured to connected to the proximity sensor 120. The micro control unit 132 further includes pin groups 1324, 1326, and the pin groups 1324, 1326 are configured to connect to the touch senor 110. In an embodiment, the pin group includes ten pins X0,...,X9. The pin group 1326 includes fifteen pins Y0,...,Y14. Because the proximity sensor 110 includes a plurality of induction antennas arranged in array, the induction antennas arranged in the longitudinal direction are connected to the ten pins X0,...,X9 and the induction antennas arranged in the transverse direction are connected to the fifteen pins Y0,...,Y14 In an alternative embodiment, the induction antennas arranged in the transverse direction are connected to the ten pins X0,...,X9 and the induction antennas arranged in the longitudinal direction are connected to the fifteen pins Y0,...,Y14.

In a second embodiment, the electronic device of the second embodiment is similar to the first embodiment, but the difference is that the touch proximity sensor 110, such as capacitance sensor, is further configured to detect the target object. Because inducting area of the touchscreen causing by the target object such as face is larger than that causing by the finger, when face of the user touches on the touchscreen of the electronic device 100, the touch sensor 110 can detect a plurality of continuous touch points. In other word, touch area of the finger is smaller than that of the face. When pluralities of fingers or a large object such as face or palm touch on the touchscreen of the electronic device100 at the same time, although the touch area of the fingers is larger, the touch points are discontinuous.

In this embodiment, when the target object is detected by the sensor 110, and the proximity sensor 120 detects the nearness of the target object, the controller 130 reports an instruction based on the touch information of the touch sensor 110, the proximity information of the proximity sensor 120 and application environment of the electronic device 100, such as locking the electronic device 100. In this embodiment, because both the touch sensor 110 and the proximity sensor 120 detect the target object, therefore, determine accuracy of the electronic device 100 is increased.

In other embodiment, a second electronic device is similar to the first electronic device, except that the touch sensor and the controller are different. The touch sensor is further configured to detect touch area of the target object. The controller determines whether the touch area of the target object is larger than a preset area and touch points of the target object are continuous. If the touch area of the target object is larger than present area and touch points of the target object is continuous, the controller determines whether touch information of the target object is transmitted to host machine of the electronic device after the controller receives the proximity information from the proximity sensor.

From the above mentioned, because the electronic device 100 includes a proximity sensor 120, therefor the electronic device 100 can be prevented from inadvertently touching. The touch sensor 110 and the proximity sensor 120 are controlled by one controller 130, such that design space and hardware cost of the electronic device 100 are decreased, and the touch sensor 110 and the proximity sensor 120 of the electronic device 100 are in a unified control and false discrimination of the touches on the touchscreen are reduced. Furthermore, both the touch sensor 110 and the proximity sensor 120 detect the target object, such that determine accuracy of the electronic device 100 is increased.

Finally, while various embodiments have been described and illustrated, the invention is not to be construed as being limited thereto. Various modifications can be made to the embodiments by those skilled in the art without departing from the true spirit and scope of the invention as defined by the appended claims.

## Claims

1. An electronic device, comprising:
a touch sensor for detecting a touch action on a touchscreen and reporting a touch information;
a proximity sensor for detecting a target object closing and reporting a proximity information; and
a controller connected to the touch sensor and the proximity sensor, wherein the controller integrates controlling functions of the touch sensor and the proximity sensor, such that the touch sensor and the proximity sensor are controlled by the same controller;
wherein when the proximity sensor detecting nearness of the target object, the controller will prevent touch report event.

2. The electronic device of claim 1, wherein the touch sensor is a capacitive touch sensor, the capacitive touch sensor is further configured to detect the target object; after the target object is detected by the capacitive touch sensor, when the proximity sensor detects the nearness of the target object, the controller will prevent touch report event.

3. The electronic device of claim 1 or 2, wherein the controller comprises:
a micro control unit connected to the touch sensor and the proximity sensor, and configured to send an instruction corresponding to the touch information of the touch sensor and the proximity information of the proximity sensor; and
a storage unit connected to the micro control unit and configured to storage program or data.

4. The electronic device of claims 1 to 3, wherein the controller further comprises:
a communication unit connected to the micro control unit and configured to communicate with the micro control unit and a host machine of the electronic device.

5. The electronic device of claims 1 to 4, wherein the micro control unit comprises a plurality of pins corresponding to the touch sensor and the proximity sensor.

6. The electronic device of claims 1 to 5, wherein the controller is arranged on a flexible printed circuit board.

7. The electronic device of claims 1 to 6, wherein the proximity sensor is a capacitance sensor, and the proximity sensor detects the nearness of the target object by change of capacitance.

8. The electronic device of claims 1 to 7, wherein the proximity sensor is an inductance sensor, and the proximity sensor detects the nearness of the target object by change of inductance.

9. The electronic device of claims 1 to 8, wherein the proximity sensor is arranged on a sensing area or a non-sensing area of the touchscreen.

10. The electronic device of claims 1 to 9, wherein the proximity sensor comprises one induction antenna or a plurality of induction antennas.

11. The electronic device of claims 1 to 10, wherein the plurality of induction antennas are dispersed or concentrated in the electronic device.

12. The electronic device of claims 1 to 11, wherein the proximity sensor is made of conductive material.

13. The electronic device of claims 1 to 12, wherein the conductive materials is metal, alloy or transparent conductive material.

14. The electronic device of claims 1 to 13, wherein the proximity sensor is made of transparent conductive material.

15. The electronic device of claims 1 to 14, wherein the transparent conductive material is indium tin oxide, carbon nanotubes, graphene or nanometer-metal.
